# EUROPEAN PATENT APPLICATION

(11) **EP 2 336 637 A1**
(43) Date of publication of application: **22.06.2011**
(21) Application number: 09179051.9
(22) Date of filing: 14.12.2009
(51) Int. Cl.: F23D 1/00, F23K 3/00, F23N 5/00

(54) **System and associated method for monitoring and controlling a power plant**

(71) Applicant: ABB Research Ltd., 8050 Zürich (CH)
(72) Inventor: Antoine, Marc, 5412 Gebenstorf (CH); Mercangoez, Mehmet, 5405 Baden-Dättwil (CH); von Hoff, Thomas, 5443 Niederrohrdorf (CH)
(74) Representative: ABB Patent Attorneys

(57) **Abstract**

A control system, for use with a power plant having a mill for pulverising material for input into a combustion system of the power plant, the control system comprising:
a first sensor (12), for recording a first parameter of a first output from the combustion system;
a second sensor (14), for recording a second parameter of a second output from the combustion system;
an adjuster system (16), for adjusting and recording at least one variable parameter of the combustion system;
a state estimator (18) component operable to receives a first signal relating to such first parameter, a second signal relating to such a second parameter and a third signal relating to such at least one variable system parameter, the state estimator component being operable to use the first signal, second signal and third signal to produce a material parameter indicator signal (20) and a system state indicator signal (22); and
an output component (24) operable to receive such a material parameter indicator signal and such a system state indicator signal and to combine said material parameter indicator signal and system state indicator signal to produce an output control signal.

## Description

### FIELD OF THE INVENTION

The present invention relates to a system and an associated method of monitoring and controlling a power plant, in particular the invention relates to a system and an associated method of controlling a power plant having a mill for pulverising material for input into a combustion system of the power plant.

### BACKGROUND OF THE INVENTION

In power plants which run on pulverized coal, the operation of the coal mill has a significant impact on the combustion efficiency of the coal within the power plant as well as having a significant impact on the amount and composition of the pollutants generated within the power plant from combustion of the pulverized coal. Moreover, the ability of coal fired power plants to respond to load change requirements mainly depends on the capability of the coal mill to change the output of pulverized fuel. Unlike burning gas or oil, where it is possible to open the control valve and immediately obtain more fuel, burning pulverized coal requires the pulverization step to be carried out first. This requires that the mill input/output has to be gradually ramped up in order to provide an increased amount of fuel to the power plant. The better the control system, the steeper this ramping up process can be.

The function of the coal mill within the power plant is to produce and dry pulverized coal of a desired amount and of a desired particle size, as required. Hot pressurized air is introduced to dry and transport the pulverized coal by fluidizing it so that it can be delivered to the burners for combustion.

The pulverization of the coal typically results in a range of particle sizes being created. However, within the burners, if the coal particles are larger than a certain size, for example 75 microns and above, then oxygen (O₂) molecules in the combustion environment cannot penetrate into the nonvolatile combustible matter deeper within the coal particles during the so called char burning phase. This results in unburned carbon which is not only a waste of fuel (and therefore costly), but also reduces the quality of the sellable byproduct, fly ash, for use as a cement additive because the unburned carbon creates black spots within the cement. The amount of unburned carbon increases both with particle size, and if there is insufficient air. However, as unburned carbon is normally monitored offline it is not possible to determine in real time whether the observed unburned carbon level is due to particle size or lack of air.

Large sized pulverized coal particles also create another problem within the burners of power stations in that they hinder the quick volatilization of Nitrogen (N) compounds from within the particle early in the reducing flame zone. When the N compounds are later released in the oxidizing flame zone of the burners or when they heterogeneously come to contact with Oxygen (O₂) inside the particle during char burning they are prone to form Nitrogen Oxide (NO), which is an undesirable precursor in the formation of acid rain. Quick volatilization ofN is desirable as release ofN during the initial burning takes place in an O₂ poor environment, thus stable N₂ is formed. However, if volatilization of N is hindered, N may not be released until the particles enter the air rich part of the furnace where the passing of air over them to complete combustion will result in the formation of undesirable NO rather than desirable stable N₂.

In view of these issues created by larger coal particle sizes within the burners, it can be seen that the pulverized coal particle sizes should be kept relatively small. The optimal size of the coal particles is determined by the composition of residual following combustion, i.e. the ash and volatiles content of the fly ash output, and the reactivity of the coal to be burned.

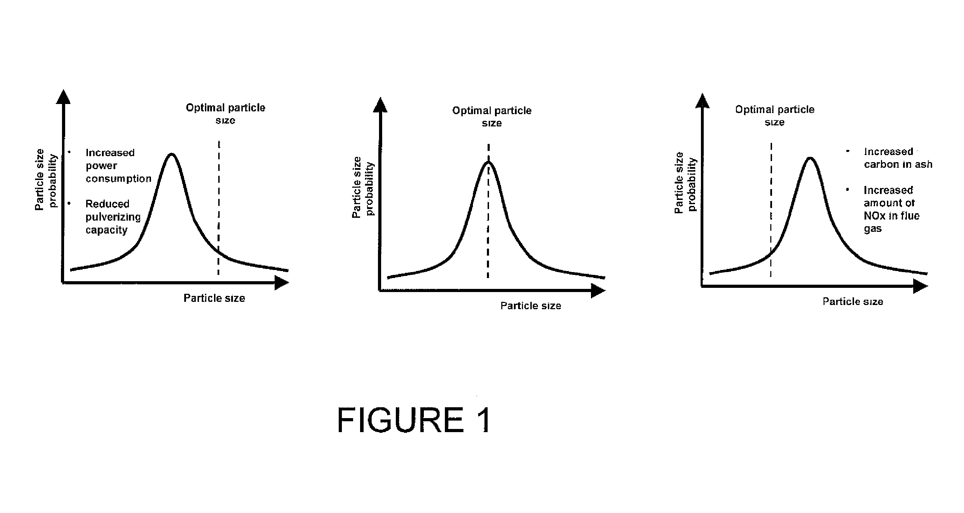

This requirement to keep the particle size small results in a tradeoff, and a conceptual representation of the trade off is illustrated on particle size distribution charts shown in Figure 1. The pulverization process requires energy and thus to pulverize the coal into smaller pieces requires more energy than the creation of large particles. Furthermore, the increased time taken to pulverize the coal to create smaller pieces reduced the amount of coal that can be pulverized by any given machine. Against this must be taken into account the energy "lost" through unburned fuel, the increase in the amount of NO output from the system and the loss of return revenue from substandard residual produce. Therefore, the optimal particle size conceptually indicated in Figure 1 can be seen as a value which is small enough not to cause any significant heat and mass transfer resistance for optimal combustion. Any value larger than the optimal particle size will increase the carbon in ash to higher than desirable levels and increase the NO formation. Any value smaller then the optimal particle size will require milling action in the pulverizing process and will lead to increased power consumption in the coal mill or an equivalent reduction in the pulverized fuel production capacity.

Typically, at the design and construction stage of building a power plant, the coal mill operating conditions and the particle size classification systems are specified to obtain the optimal particle size distribution at the design load conditions with assumed coal feed properties. However, when the power plant is operated at part load with worn out equipment, and with varying coal feed properties (i.e. moisture and hardness) the specified coal mill setting no longer produces the optimal particle size distribution. Furthermore, most power plants lack the means for online measurement of pulverized fuel particle size distribution. In view of these issues it is difficult for corrective action to be taken to control the system in order to maintain a low level of carbon in the ash output and NO in the flue gas output from the plant.

Various approaches have been taken to improve the monitoring and control of coal mill operation. Yukio Fukayama et al published An Adaptive State Estimator for Pulverizer Control Using Moments of Particle Size Distribution. (IEEE Transactions On Control Systems Technology, Vol. 12, No. 6, November 2004) which detailed fundamental mathematical models for the evolution of particle size distribution in a coal mill pulverizer and used the models in advanced control applications for coal mill systems. However, their approach was focused on a coal mill comprising a single pulverizer and did not take into account any information from the combustion output. P. Andersen et al subsequently extended this approach further and noted the relationship between the pulverizing process and combustion in "Observer-based Coal Mill Control using Oxygen Measurement" which they presented to the IFAC Symposium on Power Plants and Power Systems in 2006. By noting the relationship between the pulverizing process and combustion Andersen et al. proposed to include O₂ measurements to close an inner control loop around the coal mill. However, in this system the unburned carbon level is not measured. In a different approach, detailed in Korean Patent Application KR20040019462A (Kim Eun Gee.) "System for Controlling Unburned Carbon and Air Damper for Optimal Combustion of Boiler", the inventor details a decentralized control system for a coal mill with two control loops where an unburned carbon in ash measurement is used to adjust particle size distribution and a flue gas measurement is used to adjust the secondary combustion air flow. However this system relies solely on single variable feedback controllers for managing the pulverizing and combustion processes, which limits the accuracy of the system in responding to disturbances and reduces the response time of the power plant to load changes.

In view of the above, an object of the present invention is to obviate or mitigate at least one of the aforementioned problems.

### DESCRIPTION OF THE INVENTION

According to a first aspect of the present invention there is provided a control system, for use with a power plant having a mill for pulverising material for input into a combustion system of the power plant, the control system comprising:
a first sensor, for recording a first parameter of a first output from the combustion system;
a second sensor, for recording a second parameter of a second output from the combustion system;
an adjuster system, for adjusting and recording at least one variable parameter of the combustion system;
a state estimator component operable to receive a first signal relating to such a first parameter, a second signal relating to such a second parameter and a third signal relating to such at least one variable system parameter, the state estimator component being operable to use the first signal, second signal and third signal to produce a material parameter indicator signal and a system state indicator signal; and
an output component operable to receive such a material parameter indicator signal and such a system state indicator signal and to combine said material parameter indicator signal and system state indicator signal to produce an output control signal.

Preferably, the output component is operable to output such an output control signal to a power plant.

The arrangement of the first sensor, second sensor and adjuster system in this control system acts to provide a multivariable closed loop control scheme which, by providing feedback, will work to ensure optimum operating conditions of the power plant are reached.

In one embodiment the output control signal is a combustion system control signal.

In an alternative embodiment, the output control signal provided to the power plant will be operable to control the combustion system.

Alternatively, the output component is operable to provide the output control signal to at least one alarm means.

The arrangement of the first sensor, second sensor and adjuster system in this control system acts to provide an alarm means for enabling operators to act upon any critical issues arising within the power plant system.

Preferably, the first sensor is a carbon-in-ash sensor.

The provision of a carbon in ash sensor provides information on the unburned carbon in ash being output from the combustion system.

Further preferably, the second sensor is a gas sensor.

The gas sensor may be a carbon monoxide sensor.

Preferably the material is coal. Alternatively the material may be one or more biomass fuels.

In one embodiment, the material is a combination of coal and at least one biomass fuel.

Preferably, the mill comprises at least one pulveriser, such as, for example, a vertical spindle pulveriser. However, it will be appreciated that any other suitable pulveriser known to the skilled person may be used as an alternative to, or in addition to, a vertical spindle pulveriser.

In one embodiment, the material parameter indicator signal is a signal indicating particle size distribution.

The system state indicator signal may be a mill state indicator signal indicative of internal states of the mill.

In one embodiment, the adjuster system is operable to adjust and record at least one of total coal input into the combustion system; air flow into the combustion system; required energy output from the power plant load, pulverized fuel outlet temperature of each of the at least one pulverizer; inlet air temperature of each of the at least one pulverizer; feed rate of material input into the mill; flow rate of transport air within the mill; motor current, voltage and load of each of the at least one pulverizer and differential pressure within each of the at least one pulverizer.

According to a second aspect of the present invention there is provided a method of controlling a power plant having a mill for pulverising material for input into a combustion system of the power plant, the method comprising:
recording a first parameter of a first output from the combustion system;
recording a second parameter of a second output from the combustion system;
recording at least one adjustable variable parameter of the combustion system;
using the first signal, second signal and third signal to produce a material parameter indicator signal and a mill state indicator signal; and
combining said material parameter indicator signal and system state indicator signal to produce an output control signal.

Preferably said output control signal is provided to the power plant system.

The arrangement of provision to the power plant of a control signal generated from the first parameter, second parameter and variable parameter acts to provide a multivariable closed loop control scheme which may work iteratively to ensure optimum operating conditions of the power plant are reached.

Alternatively said output control signal may be provided to an alarm means

The arrangement of provision to an alarm means of a control signal generated from the first parameter, second parameter and variable parameter acts to provide a scheme which indicates to operators if critical issues have arisen in the power plant.

### BRIEF DESCRIPTION OF THE DRAWINGS

These and other aspects of the invention will become apparent from the following descriptions when taken in combination with the accompanying drawings in which:
Figure 1 shows a conceptual illustration of pulverized coal particle size distribution to highlight an optimal particle size for use in the combustion system of a power plant and
Figure 2 shows a power plant monitoring and control system according to a preferred embodiment of the present invention.

### DETAILED DESCRIPTION OF PREFERRED EMBODIMENTS

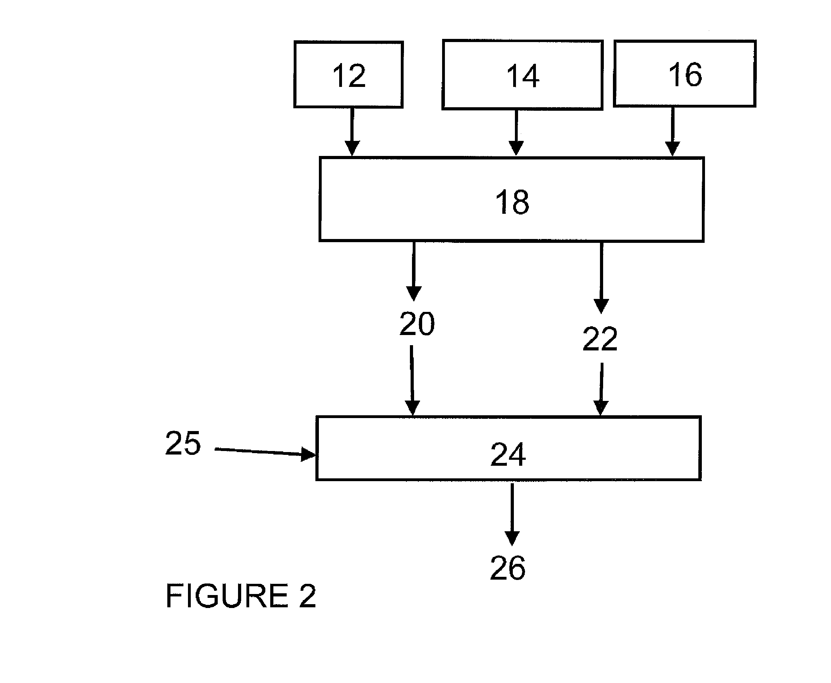

Referring to Figure 2, there is shown a system 10 for monitoring and controlling a power plant (not shown) and in particular the coal mill (not shown) operation of the power plant. The system 10 comprises a Carbon In Ash (CIA) sensor 12 and a gas sensor 14 which is operable to measuring the CO levels in the flue gas and an adjuster system 16, which in this case is a combustion control system. The CO level is a direct indication of combustion conditions. The adjuster system 16 is operable to monitor and adjust the manipulable variables such as air damper positions or burner tilt levels within a furnace of the combustion system to control the combustion process (not shown in Figure 2).

Measurements from CIA sensor 12, gas sensor 14 and readings of manipulated variable levels from adjuster system 16 are provided to a state estimator 18. The state estimator 18 applies a mathematical model of the combustion process and the coal mill to determine a material parameter indicator signal 20 for the pulverized fuel particle size distribution and a mill state indicator signal 22 representative of other internal states of the coal mill. The indicator signal 20 for the particle size distribution can vary in complexity from a simple average value to a more complex description of the particle size distribution with several moments. The internal states represented in indicator signal 22 can include moisture content and the hardness index of the coal being pulverized as well as condition related parameters of the coal mill.

The indicator signals 20 and 22 output from the state estimator 18 facilitate closed loop control of the power plant mill and combustion system by being provided to an output component which in this case is a multivariable model based controller 24 for coal mill operation. In this case the controller 24 is additionally provided with coal mill set points 25. These set points are sent by the power plant master controller and tell the mills how much coal is required. The controller 24 operates, in this case, according to a model predictive control technique which can take into account process constraints in the calculation of the control action. The internal nature of the mathematical models used in the state estimator 18 and multivariable controller 24 may be based on fundamental physical principles of coal pulverization and combustion or can be of black box type constructed from historical data or plant tests.

The coal mill model used in controller 24 will include each vertical pulverizer or ball mill in service of specific burners of the combustion system. Therefore, the multivariable controller 24 can be implemented to control all pulverizers within the mill.

The invention described in this document proposes a new monitoring and control approach for the operation of power plant coal mills based on state estimation and model predictive control technologies operating with sensors for measuring the unburned carbon content of fly ash and the flue gas CO concentration.

During operation of the power plant, variations in the unburned carbon level in fly ash depend either on the combustion conditions in the furnace or on the particle size distribution of the pulverized fuel used for combustion. Using sensors 12 and 14 to measure the physicochemical properties of the combustion products leaving the combustion system and the information characterizing the combustion conditions within the combustion system, and providing this information within control system 10, it is possible to differentiate the impact of improper combustion conditions from the impact of coal particle size on the unburned carbon levels.

Furthermore, even if the exact quantitative impact of various factors can not be determined, the system 10 forms a multivariable closed loop control scheme with feedback which will continue to manipulate all factors affecting the combustion conditions until the desired operating conditions are reached.

In operation, system 20 is implemented on a plant having a boiler furnished with a combustion control system 16, an online carbon in ash (CIA) sensor 12 and a CO sensor 14., At any given point the control system should respond to the variations in both the CIA and CO readings. The subsequent manipulation of the combustion control system 18 is outside the scope of this invention. However, the response of CO output, in the flue of the combustion system, to the combustion parameters indicates whether or not the combustion is constrained by the air/fuel balance and hence the impact of combustion air on CIA readings. A second important effect of combustion conditions on CIA levels is through the residence time of char particles in the furnace. When the plant is under a high load, the residence time of char particles within the combustion system can be as short as 2 seconds. This short residence time can lead to high CIA levels. Information provided to state estimator 18 of parameters of the combustion process taking into account all these interactions can be used to establish the effects of combustion, which is output from the state estimator as indicator signal 20 from the effects of coal mill operation status which is output from the state estimator as an indicator signal 22. Using this information the coal mill controller 24 can generate an output signal which, in this case, will act on the coal mill to maintain a desirable CIA output level.

The adjuster system 16 has been described above as being operable to monitor and adjust the manipulable variables such as air damper positions or burner tilt levels within a furnace of the combustion system to control the combustion process. However, in a preferred embodiment, such as a plant having boilers with vertical spindle mills with the plant having more than one pulverizer, the set of information provided to the adjuster system 16 includes the CIA and CO measurements, total coal and air flow to the combustion system furnace, and power plant load. As well as this information, additional information for each pulverizer including: pulverized fuel outlet temperature, pulverizer inlet air temperature, coal mill coal feed rate, coal mill transport air (primary air) flow rate, pulverizer motor current, voltage, and load, pulverizer differential pressure and classifier revolution speed are also provided to the adjuster system 16. It should be noted that the pulverizer inlet, outlet, motor and classifier are all components of each pulverizer in the mill.

The internal states represented in indicator signal 22 have been detailed as including moisture content and the hardness index of the coal being pulverized as well as condition-related parameters of the coal mill. Such condition-related parameters of the coal mill will depend on the type of coal mill, for example in a vertical spindle mill the parameters may include roller abrasion or in a ball mill the parameters may include effective ball charge.

In a further embodiment of the invention, readings of local controller errors from the power plant distributed control system (not shown) may also be provided to the state estimator 18. Variations in the estimation error can be tracked for measured values of CIA and CO and large variations can be used as an indication of unexpected process faults, such as sensor or actuator failures.

In an alternative embodiment, the multivariable controller 24 may also operate as an individual controller replicated for each pulverizer or ball mill unit within the mill. In this case, the state estimators should also be of equal multiplicity and should be configured with the corresponding pulverizer model and parameters. In effect, the control system will comprise a state estimator 18 and controller 24 for each pulverizer within the mill.

In a fourth embodiment of the invention the indicator signals 20 and 22 output from the state estimator 18 facilitate process monitoring of the plant and can be provided to alarm means (not shown) which inform operators if critical issues arise. The alarm means may be any suitable alarm means including, but not limited to, flashing faceplate entries.

It will be understood that the output from the state estimator 18 can also be used for combustion control. In this embodiment, the outputs from the state estimator will represent. In such an embodiment 20 and 22 will be the same but will be received also by a combustion optimization routine ― the setpoints 25 to controller 24 will be determined by the same combustion optimization routine.

Various modifications may be made to the embodiments hereinbefore described without departing from the scope of the invention. For example, it has been described above that the internal nature of the mathematical models used in the state estimator 18 and multivariable controller 24 may be based on fundamental physical principles of coal pulverization and combustion or can be of black box type constructed from historical data or plant tests. However, different types of models may be integrated into the calculations of the state estimation 18 or controller 24. For example, a static statistical model based on techniques such as principal component analysis can be used in parallel with the state estimator 18 specifically to check for abnormal operation and as a means to validate normal operation with low estimation error.

Whilst a variety of parameter inputs into the state estimator 18 have been detailed, other inputs may also be provided which will extend the scope and accuracy of the control system. For example, a means of direct particle size measurement, such as an appropriate particle size sensor, may be integrated into the control system 10 to provide addition information to the state estimator 18. This will provide valuable input even if the frequency at which the measurements are taken is very low. O₂ measurements can be used instead of, or as well as, CO measurements. Control of NO output may be an additional objective to the control system 10 achievable by controlling both the mill and combustion system, with appropriate measurements being taken by sensors located in the flue of the combustion systems and as this information is put through the control system 10 via state estimator 10 and output component 24, the output signal generated can control the air to fuel ratio of combustion. The control system 10 can also implement advanced ramping up and ramping down strategies of material input into the mill by temporarily allowing larger particle sizes for faster coal mill response and subsequently reducing allowed particle size when a reduced coal mill response is required. Staged increasing or decreasing of fireball position within a combustion system furnace for faster/slower steam side response can also be integrated into the control system 20 via feedback to combustion control system 16.

## Claims

1. A control system, for use with a power plant having a mill for pulverising material for input into a combustion system of the power plant, the control system comprising:
a first sensor, for recording a first parameter of a first output from the combustion system;
a second sensor, for recording a second parameter of a second output from the combustion system;
an adjuster system, for adjusting and recording at least one variable parameter of the combustion system;
a state estimator component operable to receives a first signal relating to such first parameter, a second signal relating to such a second parameter and a third signal relating to such at least one variable system parameter, the state estimator component being operable to use the first signal, second signal and third signal to produce a material parameter indicator signal and a system state indicator signal; and
an output component operable to receive such a material parameter indicator signal and such a system state indicator signal and to combine said material parameter indicator signal and system state indicator signal to produce an output control signal.

2. A control system as claimed in claim 1, wherein the output component is operable to output such an output control signal to a power plant.

3. A control system as claimed in claim 1 or 2, wherein the output control signal is a mill control signal.

4. A control system as claimed in claim 1 or 2, wherein the output control signal is a combustion system control signal.

5. A control system as claimed in any one of the preceding claims, wherein the first sensor is a carbon-in-ash sensor.

6. A control system as claimed in any one of the preceding claims, wherein the second sensor is a gas sensor.

7. A control system as claimed in claim 7, wherein the gas sensor is a carbon monoxide sensor.

8. A control system as claimed in any one of the preceding claims, wherein the material parameter indicator signal is a signal indicating particle size distribution.

9. A control system as claimed in any one of the preceding claims, wherein the control system is a multivariable controller with at least one optimization calculation.

10. A control system as claimed in any preceding claim, wherein the output component is operable to provide the output control signal to at least one alarm means.

11. A control system as claimed in any one of the preceding claims, wherein the material is coal.

12. A control system as claimed in any one of the preceding claims, wherein the material is a combination of coal and at least one biomass fuel.

13. A control system as claimed in any one of the preceding claims, wherein the mill comprises at least one pulveriser.

14. A control system as claimed in any one of the preceding claims, wherein the system state indicator signal is a signal indicative of internal states of the mill.

15. A control system as claimed in any one of the preceding claims, wherein the adjuster system is operable to adjust and record at least one of total coal input into the combustion system; air flow into the combustion system; required energy output from the power plant load, pulverized fuel outlet temperature of each of the at least one pulverizer; inlet air temperature of each of the at least one pulverizer; feed rate of material input into the mill; flow rate of transport air within the mill, motor current, voltage and load of each of the at least one pulverizer and differential pressure within each of the at least one pulverizer.

16. A method of controlling a power plant having a mill for pulverising material for input into a combustion system of the power plant, the method comprising:
recording a first parameter of a first output from the combustion system;
recording a second parameter of a second output from the combustion system;
recording at least one adjustable variable parameter of the combustion system;
using the first signal, second signal and third signal to produce a material parameter indicator signal and a mill state indicator signal; and
combining said material parameter indicator signal and system state indicator signal to produce an output control signal.

17. A method of controlling a power plant as claimed in claim 16, comprising providing said output control signal to the power plant system.

18. A method of controlling a power plant as claimed in claim 16, comprising providing said output control signal to an alarm means.
